# EUROPEAN PATENT SPECIFICATION

(11) **EP 4 258 400 B1**
(45) Date of publication and mention of the grant of the patent: **26.11.2025**
(21) Application number: 22887539.9
(22) Date of filing: 25.10.2022
(51) Int. Cl.: H01M 10/04, H01M 4/04, H01M 10/0585

(54) **ELECTRODE ASSEMBLY LAMINATION ROLLER**
LAMINIERUNGSROLLE FÜR ELEKTRODENANORDNUNG
ROULEAU DE STRATIFICATION D'ENSEMBLE ÉLECTRODE

(30) Priority: 26.10.2021 KR 20210143770; 24.10.2022 KR 20220137063
(43) Date of publication of application: 11.10.2023
(73) Proprietor: LG Energy Solution, Ltd., Seoul 07335 (KR)
(72) Inventor: KIM, Dongchan, Daejeon 34122 (KR); KIM, Jun Wan, Daejeon 34122 (KR); LEE, Seungkyu, Daejeon 34122 (KR)
(74) Representative: Plasseraud IP
(86) International application number: PCT/KR2022/016310
(87) International publication number: WO 2023/075343

(56) References cited:
- WO-A1-2020/170543
- CN-A- 111 890 619
- KR-A- 20090 099 032
- KR-A- 20170 063 222
- KR-A- 20210 030 591
- KR-A- 20210 049 297
- KR-B1- 101 429 351
- KR-B1- 102 028 611
- US-A1- 2020 156 128
- US-B1- 6 209 451

## Description

### [Technical Field]

The present application claims the benefits of priorities based on Korean Patent Application No. 10-2021-0143770 filed on October 26, 2021 and Korean Patent Application No. 10-2022-0137063 filed on October 24, 2022.

The present invention relates to an electrode assembly laminating roller for laminating an electrode and a separator.

### [Background Art]

As technology development and demand for mobile devices increase, the demand for secondary batteries as an energy source is rapidly increasing, and thus a lot of research is being done on secondary batteries that can meet various needs.

Typically, in terms of the shape of the battery, there is a high demand for thin-thick prismatic secondary batteries and pouch-type secondary batteries that can be applied to products such as mobile phones, and in terms of materials, there is a high demand for lithium secondary batteries such as lithium-ion batteries and lithium-ion polymer batteries, which have advantages such as high energy density, discharging voltage, and output stability.

In addition, the secondary battery is also classified depending on the structure of the electrode assembly of the structure of positive electrode/separator/negative electrode. Typically, a jelly-roll (wound type) electrode assembly having a structure in which long sheet-type positive electrodes and negative electrodes are wound with a separator interposed, a stacked type electrode assembly in which a plurality of positive electrodes and negative electrodes cut as units of a predetermined size are sequentially stacked with a separator interposed therebetween, and a stack/folding type electrode assembly having a structure in which bi-cells or full cells, in which positive electrodes and negative electrodes of a predetermined unit are stacked with separators interposed therebetween, are wound with a separator sheet, etc. can be exemplified.

The electrode assembly, which consists of positive electrode/separator/negative electrode, may have a simple stacked structure, but also may have a structure in which a plurality of electrodes (positive and negative electrodes) is stacked with a separator interposed therebetween and then laminated by heating/pressurizing. In this case, the laminating of the electrode and the separator is achieved by heating and pressurizing the adhesive layer applied on the separator and the electrode while they face each other. Accordingly, the separator is generally coated with a binder material to improve adhesive strength with the electrode.

In the laminating process of the electrode and the separator, the electrode taken out and cut from the electrode roll is generally disposed on the separator sheet, and the laminating roller presses and heats the separator sheet and the electrode to adhere the electrode and the separator sheet. In the state where the electrode is attached, the separator sheet is cut to complete the electrode assembly.

However, since the thickness of both ends in the full-width direction of the electrode assembly is thinner than the thickness of the central portion, the pressurizing and heating are not sufficiently performed compared to the central portion, and thus there may be a problem that the adhesive strength of both ends in the full-width direction is lowered.

Therefore, there is a high need for solving such problems.

KR 101 429 351 B1 discloses a device for manufacturing a strip shaped electrode.

CN 111 890 619 A discloses calendaring roller for plastic calendering.

US 6 209 451 B1 disloses a roll for a paper calender.

### [Prior Art Document]

### [Patent Document]

Korean Patent No. 10-1361675
Korean Patent Publication No. 10-2018-0023185

### [Disclosure]

### [Technical Problem]

As a result of conducting various studies to solve the above problems, the inventors of the present invention have confirmed that if the surface temperature of the end portion positioned at both ends of the central portion is higher than the surface temperature of the central portion of the laminating roller, the adhesive strength of both ends in the full-width direction of the electrode assembly can be improved, and thus have completed the present invention.

Therefore, it is an object of the present invention to provide an electrode assembly laminating roller capable of improving the adhesive strength of both ends in the full-width direction of the electrode assembly.

The invention is as defined by the appended claims.

### [Technical Solution]

In order to achieve the above object,
the present invention provides an electrode assembly laminating roller for laminating an electrode and a separator as recited in claim 1.

In one embodiment of the present invention, a length of the electrode assembly laminating roller may have a length corresponding to a length in the full-length direction of the electrode assembly excluding a tab.

In one embodiment of the present invention, the surface temperature of the end portion may be expressed higher than the surface temperature of the central portion by 10 to 30 °C.

In the present invention, the surface temperature of the end portion is expressed as 60 to 80 °C, and the surface temperature of the central portion is expressed as 40 to 60 °C.

The materials for the central portion and the end portion are different from each other.

In one embodiment of the present invention, the material for the end portion may have higher thermal conductivity than the material of the central portion.

In one embodiment of the present invention, the heating member may be one that applies heat of the same temperature to the central portion and the end portions.

In one embodiment not covered by the appended claims, materials for the central portion and the end portion may be the same.

In one embodiment not covered by the appended claims, the heating member may be one that allows the surface temperature of the end portion to be expressed higher than the surface temperature of the central portion.

In one embodiment of the present invention, the ratio of the length of the central portion to the length of each end portion may be 2:1 to 5:1.

In one embodiment of the present invention, the electrode assembly laminating roller may pressurize and heat the separator and the electrode fed in the full-width direction of the electrode assembly.

In one embodiment of the present invention, the electrode assembly may be a bi-cell.

In one embodiment of the present invention, the electrode assembly laminating roller may consist of a pair of rollers comprising an upper laminating roller and a lower laminating roller.

In one embodiment of the present invention, the electrode assembly laminating roller may comprise one or more pairs of rollers.

### [Advantageous Effects]

The electrode assembly laminating roller of the present invention makes the surface temperature of the end portions located at both ends of the central portion higher than the surface temperature of the central portion, thereby improving the problem of deterioration of adhesive strength occurring at both ends of the electrode assembly in the full-width direction.

### [Description of Drawings]

FIG. 1 is a perspective view schematically showing the manufacturing process of the electrode assembly.
FIG. 2 is a perspective view of an electrode assembly laminating roller according to one embodiment of the present invention.
FIG. 3 is a photograph of the electrode assembly.

### [Best Mode]

Hereinafter, the present invention will be described in detail based on the accompanying drawings so that those of ordinary skill in the art can easily carry out the present invention. However, the present invention may be embodied in several different forms and is not limited to the embodiments described herein and the scope of the invention is defined by the appended claims.

In order to clearly explain the present invention, parts not related to the description of the present invention are omitted, and the same reference numerals are assigned to the same or similar elements throughout the specification.

In addition, the terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

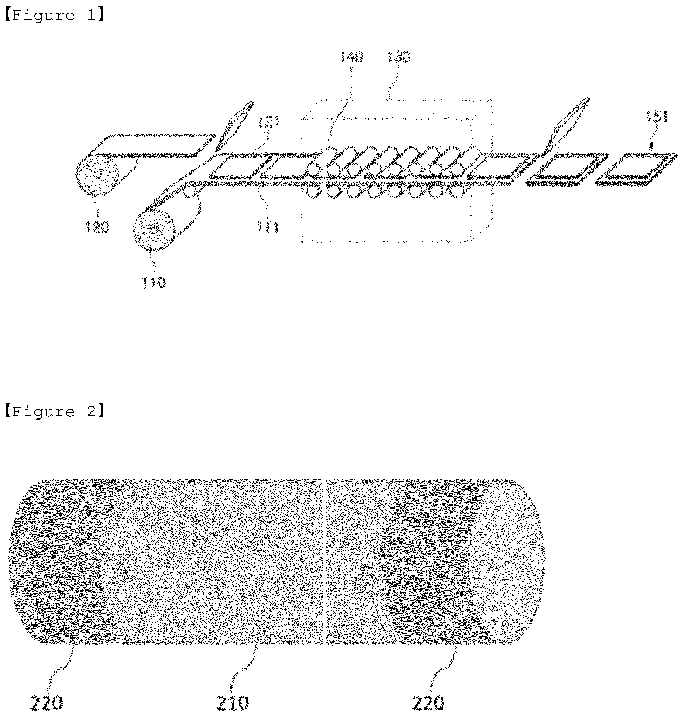

FIG. 1 is a perspective view schematically showing the manufacturing process of a general electrode assembly.

FIG. 1 shows the manufacturing process of a mono-cell consisting of one electrode and one separator.

Referring to FIG. 1, the electrode 121 taken out and cut from the electrode roll 120 is disposed on the separator sheet 111 taken out from the separator roll 110, the electrode 121 disposed on the separator sheet 111 moves to the heating and pressurizing section 130, and the separator sheet 111 and the electrode 121 pass through a laminating roller 140 which causes heating and pressurizing and thus laminating them, and thus the electrode 121 and the separator sheet 111 are laminated.

Thereafter, in a state in which the electrode 121 is adhered, the separator sheet 111 is cut to complete the electrode assembly 151.

FIG. 1 shows a process in which the electrode 121 is laminated on the separator sheet 111, but alternatively, it is of course possible to proceed with the step of disposing the electrodes on the separator cut into the unit separator, and then laminating them.

FIG. 2 is a perspective view showing an electrode assembly laminating roller 200 according to one embodiment of the present invention.

Referring to FIG. 2, the electrode assembly laminating roller 200 according to one embodiment of the present invention is for laminating the electrode and the separator, and may comprise a central portion 210 and an end portion 220 positioned at both ends of the central portion 210 with respect to the longitudinal direction, and the surface temperature of the end portions 220 may be expressed higher than the surface temperature of the central portion 210.

In addition, the laminating roller 200 includes a heating member (not shown) therein.

As described above, the electrode is disposed on the separator in the manufacturing process of the electrode assembly, and in this case, the full-width direction length of the separator is longer than the full-width direction length of the electrode. Accordingly, both ends of the electrode assembly in the full-width direction are not sufficiently heated and pressurized by the laminating roller compared to the central portion of electrode assembly, and thus there is a problem that the laminating of both ends in the full-width direction of the electrode assembly is not performed properly, and the adhesive strength is lowered. In addition, when manufacturing a bi-cell type electrode assembly, the thickness of both ends in the full-width direction of the electrode assembly is thinner than the thickness of the central portion, and thus the above problem may occur.

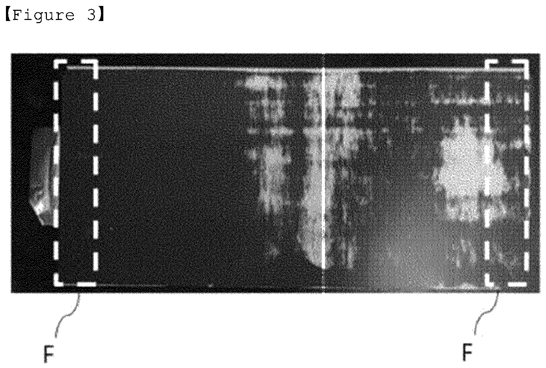

FIG. 3 is a photograph of the electrode assembly, and F is both ends of the electrode assembly in the full-width direction.

In the conventional laminating roller, the temperatures applied to the central portion of the laminating roller and the end portions positioned on both ends of the central portion are the same, and the materials for the central portion and the end portions are also the same, and thus the above problem could not be solved.

Therefore, the electrode assembly laminating roller 200 according to one embodiment of the present invention was intended to solve the problem of deterioration of adhesive strength occurring at both ends of the electrode assembly in the full-width direction, by causing the surface temperatures of the end portions 220 to be expressed higher than the surface temperature of the central portion 210 so that a higher temperature than the central portion is applied to both ends of the electrode assembly in the full-width direction.

Therefore, the surface temperatures of the end portions 220 may be expressed higher than the surface temperature of the central portion 210 by 10 to 30 °C. In the above temperature range, it is possible to improve the adhesive strength of both ends of the electrode assembly in the full-width direction.

If the surface temperatures of the end portions 220 are expressed less than 10 °C higher than the surface temperature of the central portion 210, the effect of improving the adhesive strength of both ends of the electrode assembly in the full-width direction is insignificant, and if the surface temperatures of the end portions 220 are expressed exceeding than 30 °C higher than the surface temperature of the central portion 210, the binder material in the separator may melt and clog the pores of the separator.

The surface temperatures of the end portions 220 is expressed as 60 to 80 °C, and the surface temperature of the central portion 210 is expressed as 40 to 60 °C.

The material for the central portion 210 and the end portions 220 are different from each other, and the material for the end portions 220 may be a material having higher thermal conductivity than the material for the central portion 210. Specifically, the thermal conductivity of the material for the end portions 220 may be higher than the thermal conductivity of the material for the central portion 210 by 3 to 20 W/mK.

For example, the material for the end portions 220 may be carbon steel for machine structural use or carburizing used steel, and for example, may be S45C or S50C. In addition, the material for the central portion 210 may be carbon steel for machine structural use, and for example, may be S45C or S15CK.

The thermal conductivity of the S45C is 49.8W/mK, the thermal conductivity of the S50C is 52W/mK, and the thermal conductivity of the S15CK is 32W/mK.

If the material for the end portions 220 has a higher thermal conductivity than the thermal conductivity of the material for the central portion 210, the heating member may be one that applies the same temperature to the central portion 210 and the end portions 220, or may be one that allows the surface temperatures of the end portions 220 to be expressed higher than the surface temperature of the central portion 210.

If the heating member applies the same temperature to the central portion 210 and the end portions 220, since the material for the end portions 220 has higher thermal conductivity than the material for the central portion 210, the surface temperature of the end portions 220 may be higher than that of the central portion 210. In this case, the electrode assembly laminating roller 200 may comprise one heating member. Accordingly, the heat distribution is linearly distributed on the electrode assembly laminating roller 200, and thus the difference in surface temperature does not occur rapidly for each location of the electrode assembly, thereby preventing damage to the electrode assembly due to the temperature difference.

In an embodiment not covered by the appended claims, the material for the end portions 220 and the material for the central portion 210 may be the same.

If the material for the end portions 220 and the material for the central portion 210 are the same material, the heating member may be one that allows the surface temperatures of the end portions 220 to be expressed higher than the surface temperature of the central portion 210.

If the heating member is one that allows the surface temperatures of the end portions 220 to be expressed higher than the surface temperature of the central portion 210, heating members having different heating values may be used inside the end portions 220 and the central portion 210. That is, the heating member comprised in the end portions 220 may have a higher heating value than the heating member comprised in the central portion 210.

In this case, a plurality of heating members having different heating values may be used, or a heating member providing different heating values depending on positions of the end portions 220 and the central portion 210 may be used as one heating member. However, in the above case, there may be insufficient space to insert a plurality of heating members inside the electrode assembly laminating roller 200. In order to insert the plurality of heating members, sufficient space must be secured inside the end portions 220 and the central portion 210, and for this, empty space must be expanded inside the end portions 220 and the central portion 210. As the empty space is increased, the weight of the laminating roller 200 is reduced, and thus the laminating of the electrode and separator may not be performed because the pressure applied to the electrode and separator is reduced. In addition, there is a problem that it is complicated to manufacture, and damage to the electrode assembly may occur due to a rapid temperature difference applied to the central portion and both ends of the electrode assembly.

Therefore, in the electrode assembly laminating roller 200, according to an embodiment of the invention, the material for the end portions 220 and the material for the central portion 210 are different from each other, the material for the end portions 220 has higher thermal conductivity than the material for the central portion 210, and the heating member applies heat of the same temperature to the central portion 210 and the end portions 220.

The heating member may be a cartridge insertion-type heater, a sheath heater or an induction heating heater, but is not limited thereto.

The sheath heater heats the outer shell with radiant heat by winding a coil around an inner core. For example, when the sheath heater is used as a heating member, the number of coil windings is varied in the areas of the central portion 210 and end portions 220, so that temperatures developed on the surfaces of the central portion 210 and the end portions 220 may be controlled differently from each other.

The electrode assembly may be a single cell composed of one electrode and one separator, a mono-cell having a form in which a separator is interposed between a positive electrode and a negative electrode, or a bi-cell having a form in which two separators are respectively interposed between three electrodes having different polarities from adjacent electrodes, and the mono-cell and bi-cell may include a type in which a separator is further added to the other side of the electrode that does not face the separator interposed between the electrodes.

Specifically, the bi-cell is a cell in which the same electrode is located at the outermost part electrode, such as a unit cell of positive electrode/separator/negative electrode/separator/positive electrode and a unit cell of negative electrode/separator/positive electrode/separator/negative electrode. A unit cell with a structure of positive electrode/separator/negative electrode/separator/positive electrode is defined as "A-type bi-cell", and a unit cell with a negative electrode/separator/positive electrode/separator/negative electrode structure is defined as a "C-type bi-cell". That is, a cell in which the electrode located at the center of the bi-cell is a negative electrode is referred to as an A-type bi-cell, and a cell in which the electrode located at the center of the bi-cell is a positive electrode is referred to as a C-type bi-cell.

The type of the electrode assembly is not particularly limited, but may be preferably a bi-cell.

In addition, the electrode assembly may comprise a tab, and more specifically, the positive electrode may comprise a positive electrode tab, and the negative electrode may comprise a negative electrode tab.

The length of the laminating roller 200 may have a length corresponding to the length of the electrode assembly in the full-length direction excluding the tab.

Specifically, the length of the laminating roller 200 is equal to the length of the electrode assembly in the full-length direction excluding the tab, or may be 1 to 1.1 times, preferably 1: 1.05 times, of the length of the electrode assembly in the full-length direction excluding the tab.

In addition, the ratio of the length of the central portion 210 to the length of the end portions 220 may be 2:1 to 5:1.

In the electrode assembly, the thickness of both ends in the full-width direction is thinner than the thickness of the central portion, and the problem of deterioration of adhesive strength occurs at both ends in the full-width direction. Therefore, in order to solve this problem, the electrode assembly laminating roller 200 according to one embodiment of the present invention can pressurize and heat the separator and electrode fed in the full-width direction of the electrode assembly.

The separator and electrode are fed in the full-width direction, and thus the end portions of the laminating roller 200 come into contact with both ends of the separator and electrode in the full-width direction, and the problem of deterioration of adhesive strength occurring at both ends in the full-width direction can be improved by heating and pressurizing them.

In the conventional electrode assembly laminating roller, the adhesive strength of both ends in the full-width direction was 70 to 80% of the adhesive strength of the central portion of the electrode assembly. However, in the electrode assembly laminating roller 200 according to one embodiment of the present invention, the adhesive strength of both ends in the full-width direction may be 85 to 95% of the adhesive strength of the central portion of the electrode assembly. That is, the electrode assembly laminating roller 200 according to one embodiment of the present invention can improve the adhesive strength of both ends in the full-width direction of the electrode assembly.

In addition, the laminating roller 200 may be composed of a pair of rollers comprising an upper laminating roller and a lower laminating roller, and the laminating roller may be one or more pairs of rollers.

For example, the laminating roller 200 may be composed of two or more pairs of rollers, and n number of laminating rollers 200 may be disposed from the first laminating roller, through which the electrode and the separator pass first, to the sequentially arranged n^{th} laminating roller.

In addition, the laminating roller 200 may be in a form in which times for pressurizing and heating electrodes and separators can be set and the rotational speed can be also adjusted.

Those skilled in the art related to the present embodiment will be able to understand that the embodiments may be implemented in modified forms without departing from the essential characteristics of the above description. Therefore, the disclosed methods should be considered from an illustrative point of view rather than a limiting point of view. The scope of the present invention is shown in the claims rather than the foregoing description.

### Mode for carrying out the present invention

Hereinafter, preferred examples are presented to aid understanding of the present invention. However, the following examples are merely illustrative of the present invention, and it is obvious to those skilled in the art that various changes and modifications can be made within the scope the present invention, and it is natural that such changes and modifications fall within the scope of the appended claims.

### <Manufacture of electrode assembly laminating roller>

### Example 1.

A laminating roller comprising a central portion and end portions positioned at both ends of the central portion based on the length direction of the laminating roller was manufactured.

The roller was manufactured using S15CK as a material for the central portion and S45C as a material for the end portions, and a cartridge insertion type heater was used as a heating member.

At this time, the ratio of the length of the central portion to the length of each end portion was 3:1, and the surface temperature expressed in the central portion was 60 °C and the surface temperature expressed in the end portion was 80 °C.

### Comparative Example 1.

An electrode assembly laminating roller was manufactured using S45C as the material for the central portion and the material for the end portion, the heating member is a cartridge insertion type heater, and the surface temperature of the central portion and the surface temperature of the end portion is expressed as 80 °C.

### Experimental Example 1. Measurement of adhesive strength of electrode assembly

Each electrode assembly was prepared by laminating the electrode and the separator using the electrode assembly laminating roller prepared in Example 1 and Comparative Example 1 above.

At this time, the length of the electrode assembly in the full-length direction was the same as the length of the electrode assembly laminating roller of Example 1 and Comparative Example 1. In addition, the separator and electrode were fed in their full-width direction, and the laminating roller of Example 1 and Comparative Example 1 heated and pressurized them to laminate them and thus to prepare each electrode assembly.

The adhesive strength of the central portion of the prepared electrode assembly and both ends in the full-width direction were measured, and the results are shown in Table 1 below.

**[Table 1]**

| (unit: gf/20mm) | | | |
|---|---|---|---|
| | First end portion | Central portion | Second end portion |
| Example 1 | 22.3 | 24.781 | 22.3 |
| Comparative Example 1 | 19.165 | 24.781 | 19.902 |

When the electrode assembly was manufactured with the laminating roller of Comparative Example 1, the adhesive strength of both ends showed about 77 and 80% of the adhesive strength of the central portion.

However, when the electrode assembly was manufactured with the laminating roller of Example 1, the adhesive strength of both ends showed about 90% of the adhesive strength of the central portion.

From this, it can be seen that the electrode assembly laminating roller according to one embodiment of the present invention can improve the adhesive strength of both ends of the electrode assembly in the full-width direction.

**[Description of Symbol]**

| | | | |
|---|---|---|---|
| 110: | Separator roll | 111: | Separator sheet |
| 120: | Electrode roll | 121: | Electrode |
| 130: | Heating and pressurizing section | | |
| 140, 200: | Laminating roller | | |
| 151: | Electrode assembly | 210: | Central portion |
| 220: | End portion | | |

## Claims

1. An electrode assembly laminating roller (140) for laminating an electrode (121) and a separator,
wherein the electrode assembly laminating roller (140) comprises a central portion (210); and an end portion (220) positioned at both ends of the central portion (210) with respect to the longitudinal direction,
wherein the electrode assembly laminating roller (140) comprises a heating member therein,
wherein materials for the central portion (210) and the end portion (220) are different from each other,
wherein the laminating roller (140) is configured to express the surface temperature of the end portions (220) to be 60 to 80 °C, and the surface temperature of the central portion (210) to be 40 to 60 °C, and
wherein the laminating roller (140) is configured to express a surface temperature of the end portions (220) higher than a surface temperature of the central portion (210).

2. The electrode assembly laminating roller (140) according to claim 1, wherein a length of the electrode assembly laminating roller (140) is configured to be a length corresponding to a length of the electrode assembly (151) in the full-length direction excluding a tab.

3. The electrode assembly laminating roller (140) according to claim 1, wherein the laminating roller (140) is configured to express the surface temperature of the end portions (220) to be higher than the surface temperature of the central portion (210) by 10 to 30 °C.

4. The electrode assembly laminating roller (140) according to claim 1, wherein the material for the end portion (220) has higher thermal conductivity than the material for the central portion (210).

5. The electrode assembly laminating roller (140) according to claim 4, wherein the heating member is one that is configured to apply heat of the same temperature to the central portion (210) and the end portions (220).

6. The electrode assembly laminating roller (140) according to claim 1, wherein the ratio of the length of the central portion (210) to the length of each end portion (220) is 2:1 to 5:1.

7. The electrode assembly laminating roller (140) according to claim 1, wherein the electrode assembly laminating roller (140) is configured to pressurize and heat the separator and electrode (121) fed in the full-width direction of the electrode assembly (151).

8. The electrode assembly laminating roller (140) according to claim 1, wherein the electrode assembly laminating roller (140) is configured to laminate an electrode assembly (151) which is a bi-cell.

9. The electrode assembly laminating roller (140) according to claim 1, wherein the electrode assembly laminating roller (140) is composed of a pair of rollers comprising an upper laminating roller (140) and a lower laminating roller (140).

10. The electrode assembly laminating roller (140) according to claim 9, wherein the electrode assembly laminating roller (140) comprises one or more pairs of rollers.

## Patentansprüche

1. Elektrodenanordnungslaminierungswalze (140) zum Laminieren einer Elektrode (121) und eines Separators,
wobei die Elektrodenanordnungslaminierungswalze (140) umfasst: einen zentralen Abschnitt (210); und einen Endabschnitt (220), welcher in Bezug auf die longitudinale Richtung an beiden Enden des zentralen Abschnitts (210) positioniert ist,
wobei die Elektrodenanordnungslaminierungswalze (140) darin ein Heizelement umfasst,
wobei Materialien für den zentralen Abschnitt (210) und den Endabschnitt (220) voneinander verschieden sind,
wobei die Laminierungswalze (140) dazu eingerichtet ist, die Oberflächentemperatur der Endabschnitte (220) derart auszudrücken, dass sie 60 bis 80 °C beträgt, und eine Oberflächentemperatur des zentralen Abschnitts (210) derart auszudrücken, dass sie 40 bis 60 °C beträgt, und
wobei die Laminierungswalze (140) dazu eingerichtet ist, eine Oberflächentemperatur der Endabschnitte (220) höher auszudrücken als eine Oberflächentemperatur des zentralen Abschnitts (210).

2. Elektrodenanordnungslaminierungswalze (140) nach Anspruch 1, wobei eine Länge der Elektrodenanordnungslaminierungswalze (140) derart eingerichtet ist, dass sie eine einer Länge der Elektrodenanordnung (151) in der gesamten Längenrichtung mit Ausnahme einer Lasche entsprechende Länge ist.

3. Elektrodenanordnungslaminierungswalze (140) nach Anspruch 1, wobei die Laminierungswalze (140) dazu eingerichtet ist, die Oberflächentemperatur der Endabschnitte (220) derart auszudrücken, dass sie um 10 bis 30 °C höher ist als die Oberflächentemperatur des zentralen Abschnitts (210).

4. Elektrodenanordnungslaminierungswalze (140) nach Anspruch 1, wobei das Material für den Endabschnitt (220) eine höhere thermische Leitfähigkeit aufweist als das Material für den zentralen Abschnitt (210).

5. Elektrodenanordnungslaminierungswalze (140) nach Anspruch 4, wobei das Heizelement eines ist, welches dazu eingerichtet ist, Wärme der gleichen Temperatur auf dem zentralen Abschnitt (210) und die Endabschnitte (220) anzuwenden.

6. Elektrodenanordnungslaminierungswalze (140) nach Anspruch 1, wobei das Verhältnis der Länge des zentralen Abschnitts (210) zu der Länge jedes Endabschnitts (220) 2:1 bis 5:1 ist.

7. Elektrodenanordnungslaminierungswalze (140) nach Anspruch 1, wobei die Elektrodenanordnungslaminierungswalze (140) dazu eingerichtet ist, den Separator und die Elektrode (121), welche in der gesamten Breitenrichtung der Elektrodenanordnung (151) zugeführt werden, mit Druck zu beaufschlagen und zu erwärmen.

8. Elektrodenanordnungslaminierungswalze (140) nach Anspruch 1, wobei die Elektrodenanordnungslaminierungswalze (140) dazu eingerichtet ist, eine Elektrodenanordnung (151) zu laminieren, welche eine Bizelle ist.

9. Elektrodenanordnungslaminierungswalze (140) nach Anspruch 1, wobei die Elektrodenanordnungslaminierungswalze (140) aus einem Paar von Walzen gebildet ist, welches eine obere Laminierungswalze (140) und eine untere Laminierungswalze (140) umfasst.

10. Elektrodenanordnungslaminierungswalze (140) nach Anspruch 9, wobei die Elektrodenanordnungslaminierungswalze (140) ein oder mehrere Paare von Walzen umfasst.

## Revendications

1. Rouleau de stratification d'ensemble électrode (140) pour stratifier une électrode (121) et un séparateur,
dans lequel le rouleau de stratification d'ensemble électrode (140) comprend une partie centrale (210) ; et une partie d'extrémité (220) positionnée à chaque extrémité de la partie centrale (210) par rapport à la direction longitudinale,
dans lequel le rouleau de stratification d'ensemble électrode (140) comprend un élément chauffant à l'intérieur,
dans lequel des matériaux pour la partie centrale (210) et la partie d'extrémité (220) sont différents l'un de l'autre,
dans lequel le rouleau de stratification (140) est configuré pour faire en sorte que la température de surface des parties d'extrémité (220) soit comprise entre 60 et 80°C et que la température de surface de la partie centrale (210) soit comprise entre 40 et 60°C, et
dans lequel le rouleau de stratification (140) est configuré pour faire en sorte qu'une température de surface des parties d'extrémité (220) soit supérieure à une température de surface de la partie centrale (210).

2. Rouleau de stratification d'ensemble électrode (140) selon la revendication 1, dans lequel une longueur du rouleau de stratification d'ensemble électrode (140) est configurée pour être une longueur correspondant à une longueur de l'ensemble électrode (151) dans la direction de pleine longueur à l'exclusion d'une languette.

3. Rouleau de stratification d'ensemble électrode (140) selon la revendication 1, dans lequel le rouleau de stratification (140) est configuré pour faire en sorte que la température de surface des parties d'extrémité (220) soit supérieure à la température de surface de la partie centrale (210) de 10 à 30 °C.

4. Rouleau de stratification d'ensemble électrode (140) selon la revendication 1, dans lequel le matériau de la partie d'extrémité (220) présente une conductivité thermique supérieure à celle du matériau de la partie centrale (210).

5. Rouleau de stratification d'ensemble électrode (140) selon la revendication 4, dans lequel l'élément chauffant est un élément configuré pour appliquer une chaleur de la même température à la partie centrale (210) et aux parties d'extrémité (220).

6. Rouleau de stratification d'ensemble électrode (140) selon la revendication 1, dans lequel le rapport entre la longueur de la partie centrale (210) et la longueur de chaque partie d'extrémité (220) est de 2:1 à 5:1.

7. Rouleau de stratification d'ensemble électrode (140) selon la revendication 1, dans lequel le rouleau de stratification d'ensemble électrode (140) est configuré pour mettre sous pression et chauffer le séparateur et l'électrode (121) acheminés dans la direction de pleine largeur de l'ensemble électrode (151).

8. Rouleau de stratification d'ensemble électrode (140) selon la revendication 1, dans lequel le rouleau de stratification d'ensemble électrode (140) est configuré pour stratifier un ensemble électrode (151) qui est une bicellule.

9. Rouleau de stratification d'ensemble électrode (140) selon la revendication 1, dans lequel le rouleau de stratification d'ensemble électrode (140) est composé d'une paire de rouleaux comprenant un rouleau de stratification supérieur (140) et un rouleau de stratification inférieur (140).

10. Rouleau de stratification d'ensemble électrode (140) selon la revendication 9, dans lequel le rouleau de stratification d'ensemble électrode (140) comprend une ou plusieurs paires de rouleaux.
